(19) Europäisches Patentamt
European Patent Office
Office européen des brevets

(11) Veröffentlichungsnummer: **0 297 285 B1**

(12) # EUROPÄISCHE PATENTSCHRIFT

(45) Veröffentlichungstag der Patentschrift: **14.10.92**

(51) Int. Cl.$^5$: **C08L 69/00**, C08L 33/12, G11B 7/24

(21) Anmeldenummer: **88108477.6**

(22) Anmeldetag: **27.05.88**

Die Akte enthält technische Angaben, die nach dem Eingang der Anmeldung eingereicht wurden und die nicht in dieser Patentschrift enthalten sind.

(54) **Verträgliche Polycarbonat-Polymethacrylat-Mischungen.**

(30) Priorität: **06.06.87 DE 3719239**

(43) Veröffentlichungstag der Anmeldung: **04.01.89 Patentblatt 89/01**

(45) Bekanntmachung des Hinweises auf die Patenterteilung: **14.10.92 Patentblatt 92/42**

(84) Benannte Vertragsstaaten: **DE ES FR GB IT NL**

(56) Entgegenhaltungen:
**EP-A- 0 097 948** **EP-A- 0 199 824**
**EP-A- 0 203 487** **EP-A- 0 203 975**
**EP-A- 0 262 502** **FR-A- 2 167 650**
**FR-A- 2 553 919**

**FEINWERKTECHNIK & MESSTECHNIK Band 93, Nr. 6, August/September 1985, München, Seiten 305-308; Dr. J. Hennig: "Substrate aus transparenten Kunststoffen für optische Speicherplatten"**

**PATENT ABSTRACTS OF JAPAN Band 10, Nr. 245 (C-368) (2301) 22. August 1986; & JP - A - 61 76509**

**PATENT ABSTRACTS OF JAPAN, Band 7, Nr. 83 (C-160) (1228) 7. Apr. 1983; & JP - A - 58 13652**

(73) Patentinhaber: **Röhm GmbH**
**Kirschenallee Postfach 4242**
**W-6100 Darmstadt 1(DE)**

(72) Erfinder: **Fischer, Jens-Dieter, Dr.**
**Moosbergstrasse 95**
**W-6100 Darmstadt(DE)**
Erfinder: **Siol, Werner, Dr.**
**Goerdelerweg 34**
**W-6100 Darmstadt-Eberstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft Polymermischungen aus aromatischem Polycarbonat, insbesondere dem Polycarbonat von Bisphenol A, und Methacrylat-Copolymeren, die sich durch hohe Transparenz auszeichnen.

Polymermischungen, enthaltend ein aromatisches Polycarbonat als eine Komponente und ein Vinylpolymeres als eine andere Komponente, sind bekannt. Nach der DE-A-23 29 585, Seiten 11 bis 12, werden völlig homogene und transparente Polycarbonat-Formmassen-Mischungen erhalten, wenn als aromatisches Polycarbonat ein solches von 2,2-Bis-(3,5-dimethyl-4-hydroxyphenyl)-propan, das ist ein o,o,o′,o′-tetraalkyliertes Bisphenol, mit z.B. Polystyrol, als einem thermoplastischen Harz, abgemischt wird. Im Gegensatz dazu bestehen, nach den dortigen Ausführungen, Mischungen aus 2,2-Bis-(4-hydroxyphenyl)-propan-Polycarbonat, das ist das Polycarbonat von Bisphenol A, und Polystyrol aus zwei Phasen. Weitere thermoplastische Harze, die sich in diesen Mischungen ähnlich wie Polystyrol verhalten, sind, wie in der DE-OS, Seiten 5 und 6 beschrieben, auch Homo- und Copolymerisate von Acryl-und Methacrylverbindungen, wie z.B. von Methylacrylat, Ethylacrylat, Methylmethacrylat und Cyclohexylmethacrylat. Polymethylmethacrylat-Formmasse, ein glasklarer, transparenter Kunststoff gibt mit dem Polycarbonat des Bisphenol A, einem ebenfalls transparenten Kunststoff, keine homogenen, transparenten Legierungen, sondern wie u.a. aus der JP-A-72 16 063 bekannt ist, Mischungen mit perlartigem Glanz.

Nach der DE-A 22 64 268 wird eine verbesserte Polycarbonat-Formmasse erhalten, wenn dem Polycarbonat ein Acrylpolymeres mit niedrigem Molekulargewicht, das ein aus 90 bis 75 Gew.-% Methylmethacrylat und 10 bis 25 Gew.-% eines Alkylacrylates der Formel

$$H_2C=\overset{\displaystyle X}{\overset{|}{C}}-COOR,$$

mit X gleich H oder $CH_3$ und R ein organischer Rest mit 4 bis 12 Kohlenstoffatomen, bestehendes Copolymeres ist, zugesetzt wird. Die Menge des Copolymerzusatzes kann 0,01 bis etwa 50 Gew.-% des Gewichtes der Polycarbonatzusammensetzung betragen. Hierdurch wird die Schmelzviskosität des Polycarbonates bzw. der Mischung ohne Beeinträchtigung der Transparenz mit steigendem Copolymer-Zusatz laufend verringert.

Bei diesen Copolymeren handelt es sich also um polymere Weichmacher, deren Molekulargewicht zur Erzielung der beschriebenen Verträglichkeit aufgrund eigener Versuche mit entsprechenden Copolymeren unter 15 000 liegen muß. Zur Herstellung von Polymerlegierungen, die auch im Bereich hoher Polymethacrylat-Anteile technisch interessante Eigenschaften haben, sind solche Copolymere wegen des bekannten Abfalls der mechanischen Eigenschaften im Molekulargewichtsbereich unter 100 000, insbesondere unter 50 000 (siehe Kunststoff-Handbuch, Band IX, Vieweg/Esser: Polymethacrylate, S. 112 ff) jedoch völlig ungeeignet.

Verträgliche Polymermischungen, die aus einem Poiycarbonat, wie dem Bisphenol A-Polycarbonat und einem Copolymerisat aus monomeren Estern der Acryl- und/oder Methacrylsäure mit $C_1$-$C_{10}$-Alkoholen und einem UV-absorbierendem Monomeren der Formel

$$H_2C=\overset{\displaystyle R_1}{\overset{|}{C}}-\overset{\displaystyle O}{\overset{\|}{C}}-Y-Z,$$

worin $R_1$ für Wasserstoff oder einen Methylrest und Y für Sauerstoff oder einen Rest $NR_2$ mit $R_2$ Wasserstoff oder Alkylrest stehen, und Z ein UV-absorbierender Rest, nämlich ein 2-Hydroxyphenylbenzotriazolrest, ein 2-Hydroxybenzo- oder acetophenonrest oder ein $\alpha$-Cyano-$\beta$,$\beta$-diphenylrest ist, bestehen, sind in der DE-A-35 18 53 ( = EP-A-203 487) beschrieben.

Solche, auch thermoplastisch verarbeitbare Polymermischungen aus Polycarbonat und Copolymeren des Methylmethacrylats und Monomeren mit ausgeprägtem Absorptionsvermögen für Ultraviolettstrahlung, und die als Lichtschutzmittel zur Verbesserung der Lichtbeständigkeit von z.B. Kunststoffen, insbesondere durch deren Beschichtung dienen, sind nur sehr speziell brauchbare Polymermischungen und von dem hohen Preis der damit eingebrachten UV-Absorber her, für breit anwendbare, thermoplastisch verarbeitbare Massen, prohibitiv. In der nach veröffentlichten DE-A-36 32 946 ( = EP-A-262 502) sind thermoplastisch verarbeitbare Methylmethacrylat-Copolymere mit Methacrylamiden als Comonomere, die am Amidstickstoff mit einem organischen Rest eines cyclischen Moleküls substituiert sind, und der weiter kein ausgeprägtes

UV-Absorptionsvermögen besitzt, beschrieben. Diese Copolymeren bilden mit Polycarbonaten, insbesondere Bisphenol A-Polycarbonaten, transparente, thermoplastisch verarbeitbare Polymermischungen.

Thermoplastische Formmassen als Polymermischungen aus einem Polycarbonat, einem Copolymeren, aus Styrol, Methylmethacrylat und N-Phenylmaleinimid, und einem Pfropfpolymerisat von Methylmethacrylat auf Kautschuk, sind nach EP-A-173 146 nicht verträglich. Ebenso sind die aus EP-A-144 231 bekannten Polymermischungen, bestehend aus einem Polycarbonat und einem Copolymeren von Methylmethacrylat/N-Phenylmaleinimid und/oder einem EPDM-g-Methylmethacrylat/N-Phenylmaleinimid-Copolymeren, nicht voll kompatibel.

Transparente, thermoplastisch verarbeitbare Polymermischungen aus aromatischen Polycarbonaten, insbesondere dem Polycarbonat von Bisphenol A, und einem Methacrylat-Copolymerisat, das aus Methylmethacrylateinheiten und N-Cyclohexylmaleinimideinheiten aufgebaut ist, sind in der nach veröffentlichten DE-A-37 09 562 (= EP-A-283 975) beschrieben. Zum Aufbau des Methacrylat-Copolymerisates können wahlweise noch weitere Monomere in Mengen von 0 bis 40 Gew.-%, wie u.a. Cycloalkyl- oder Alkylester der Acryl- bzw. Methacrylsäure, mitverwendet werden. Die Polymermischungen lassen sich wie die aus DE-A-36 32 946, im Vergleich zu den Einzelkomponenten, nämlich dem Bisphenol A-Polycarbonat oder dem Polymethylmethacrylat, infolge ihrer geringen optischen Doppelbrechung und/oder verringerten Wasseraufnahme, vorteilhaft als optische Harzmaterialien verwenden.

Polymermischungen aus aromatischem Polycarbonat und Methylmethacrylat-Copolymerisaten mit N-haltigen Comonomer-Bausteinen, zeigen noch Eigenschaften, die insbesondere ihre Verwendung als optische Harzmaterialien nachteilig beeinflussen. Bei ihrer thermoplastischen Verärbeitung, insbesondere in Gegenwart von $O_2$ treten, wie schon lange von N-haltigen Polymermaterialien bekannt, Veränderungen ein, wobei die extrudierten oder spritzgegossenen Teile gelb verfärbt werden. Es bestand daher die Aufgabe, transparente, thermoplastisch verarbeitbare Polymermischungen, bestehend aus aromatischem Polycarbonat und einem Polymeren, das bis zu hohen Anteilen aus Methylmethacrylat aufgebaut ist, zu finden, wobei das Methylmethacrylat-Polymere durch Einbau weiterer Monomerer so verändert wird, daß es mit dem Polycarbonat verträglich wird und die so hergestellten neuen Mischungen die bisher aufgetretenen nachteiligen Eigenschaften nicht mehr haben.

Gegenstand der Erfindung sind thermoplastisch verarbeitbare Formmassen gemäß den Ansprüchen, die verträgliche Polymermischungen von Polycarbonaten und durch Copolymerisation von Methylmethacrylat mit carbocyclische Gruppen, wie Cyclohexyl- oder Phenylgruppen, im Esterrest enthaltenden Methacryl- und gegebenenfalls Acrylestern, und gegebenenfalls weiteren Monomeren, wie Styrol und insbesondere $\alpha$-Methylstyrol oder weiteren Methacryl- bzw. Acrylestern, hergestellte Polymerisate sind.

Es wurde gefunden, daß glasklare Polymethacrylatharze mit Kunststoffeigenschaften und Polycarbonate, wie das Polycarbonat des Bisphenol A, das seinerseits zu den schlagzähen, transparenten Kunststoffen zählt, überraschenderweise nach den für "Compatible Polymers" in Polymer Handbook, Second Edition, 1975, III, 211 bis 213, ersichtlichen Kriterien, zu verträglichen und wiederum glasklaren neuen Kunststoffen legiert werden können, wenn als Polymethacrylatharze Copolymerisate eingesetzt werden, die aus 95 bis 5 Gew.-%, insbesondere 95 bis 20 Gew.-%, Methylmethacrylat und 5 bis 95 Gew.-%, insbesondere 5 bis 80 Gew.-%, eines Methacrylsäureesters und 0, insbesondere 1, bis 5 Gew.-% eines Acrylsäureesters mit jeweils einer carbocyclischen Gruppe im Esterrest gemäß Anspruch 1 aufgebaut sind. Die carbocyclische Gruppe im Esterrest der Acryl- bzw. Methacrylverbindung ist direkt an das Estersauerstoffatom, oder über (Oxi)Alkylengruppen gemäß Anspruch 1 an diese gebunden. Bei der Herstellung des Copolymerisats konnen noch weitere $\alpha,\beta$-ungesättigte Monomere, wie insbesondere $\alpha$-Methylstyrol und/oder weitere Methacryl- bzw. Acrylverbindungen, insbesondere deren Ester, in Mengen von 0 bis 40 Gew.-%, insbesondere in Mengen von 2,5 bis 40 Gew.-% und vor allem in Mengen von 5 bis 35 Gew.-%, mitverwendet werden.

Überraschenderweise sind die erfindungsgemäßen Polymermischungen über den ganzen Legierungsbereich, d.h. bei Verhältnissen aromatisches Polycarbonat (A) : Polymethacrylat-Copolymerisat (B) von 99,1 : 0,9 bis 0,9 : 99,1, in Gew.-%, verträglich. Technisch interessante Legierungen enthalten jedoch mehr als 5 Gew.-%, und vor allem mehr als 10 Gew.-%, der einen oder anderen Komponente.

Daß Methylmethacrylat-Copolymerisate der angegebenen Art mit Polycarbonaten, wie insbesondere dem Polycarbonat von Bisphenol A, erfindungsgemäße, verträgliche Polymermischungen mit hohen optischen Qualitäten ergeben, war nach dem Stand der Technik und insbesondere nach der im Stand der Technik vorgestellten DE-OS 23 29 585 nicht zu erwarten und ist überraschend.

Die Verträglichkeit von Polycarbonat und Polymethacrylatharz wird erfindungsgemäß dadurch herbeigeführt, daß Methacrylester und gegebenenfalls Acrylester gemäß Anspruch 1
im Polymethacrylatharz einpolymerisiert sind.

Beispiele solcher Acryl- und Methacrylester mit carbocyclischen Gruppen im Esterrest sind Cyclopentylmethacrylat, Cyclohexylacrylat, Cyclohexylmethacrylat, 3,3,5-Trimethylcyclohexylmethacrylat, 4-t-Butylcyclohexylacrylat, 4-t-Butylcyclohexylmethacrylat, 3-Cyclohexylpropylmethacrylat, Phenylmethacrylat, 4-t-Butylphenylmethacrylat, 4-Methoxyphenylmethacrylat Benzylmethacrylat, 1-Phenylethylmethacrylat, 2-Phenylethylacrylat, 2-Phenylethylmethacrylat, 3-Phenylpropylacrylat, 3-Phenylpropylmethacrylat, 2-Phenoxyethylmethacrylat, 2-Naphthylmethacrylat.

Die vorliegende Erfindung ist gerichtet auf eine transparente, thermoplastisch verarbeitbare Polymermischung, bestehend aus

(A) einem aromatischen Polycarbonat und

(B) einem Methacrylat-Copolymerisat,

wobei das Copolymerisat (B)

1. aus 95 bis 5 Gew.-%, insbesondere 95 bis 20 Gew.-% Methylmethacrylateinheiten und weiteren $\alpha,\beta$-ungesättigten Monomereinheiten in Mengen von 0 bis 40 Gew.-%, insbesondere 2,5 bis 40 Gew.-%, und

2. aus 5 bis 95 Gew.-%, insbesondere 5 bis 80 Gew.-%, Methacrylestereinheiten und 0, insbesondere 1, bis 5 Gew.-% Acrylestereinheiten mit carbocyclischen Gruppen im Esterrest der Formel I

$$H_2C = \overset{R_1}{\overset{|}{C}} - \overset{O}{\overset{\|}{C}} - O - X \qquad I,$$

worin

R₁ : H oder $CH_3$ und

X: Y oder A-Y sind, wobei

Y ein Cycloalkyl- oder ein einfach oder mehrfach alkylsubstituierter Cycloalkylrest mit 5 bis 12 C-Atomen, oder

ein gegebenenfalls alkyl- bzw. oxyalkylsubstituierter Arylrest mit 6 bis 12 C-Atomen, und

A eine Alkylengruppe, die auch verzweigt sein kann, mit 1 bis 6 C-Atomen oder eine Oxyalkylengruppe mit 2 bis 4 C-Atomen sind,

besteht und

3. ein Molekulargewicht über 30 000 hat.

Das Polycarbonat (A) ist insbesondere das Reaktionsprodukt von 2,2-Bis-(4-hydroxyphenyl)-propan, als Bisphenol A bekannt, und Phosgen.

Das Copolymerisat (B) und die darin copolymerisierten Monomeren der Formel I zeichnen sich gegenüber den in der DE-A-35 18 538 beschriebenen Copolymeren und Monomeren dadurch aus, daß sie im gesamten optisch sichtbaren Bereich bis hin in den UV-Bereich von 340 nm keine wesentliche Absorption haben.

Die erfindungsgemäß mit Polycarbonaten, insbesondere dem Polycarbonat von Bisphenol A, verträglichen Polymethacrylatharze sind vorteilhafterweise wesentlich aus Methylmethacrylat aufgebaut.

In Mengen von 5 bis 95 Gew.-% enthält erfindungsgemäß das Methacrylatpolymere copolymerisierte Methacrylester-Einheiten und gegebenenfalls in Mengen von 0, insbesondere von 1 bis 5 Gew.-% Acrylestereinheiten oben angegebener Sturktur I. Das Copolymerisat kann in Mengen von 0 bis 40 Gew.-%, insbesondere in Mengen von 2,5 bis 40 Gew.-% und vor allem in Mengen von 5 bis 35 Gew.-%, weitere Einheiten $\alpha,\beta$-ungesättigter Monomerer, wie z.B: Styrol, $\alpha$-Methylstyrol, Acrylsäure bzw. Methacrylsäure oder deren Alkylester mit 2 bis 10 C-Atomen im Esterrest, wobei die Alkylgruppen auch verzweigt sein können, enthalten.

Die Herstellung dieser statistisch aufgebauten Copolymerisate wird nach bekannten Verfahren zur Polymerisation $\alpha,\beta$-ungesättigter Verbindungen, insbesondere der radikalischen Polymerisation, beispielsweise in Substanz oder in Lösung oder als Suspensionspolymerisation, durchgeführt. Als radikalische Polymerisationsinitiatoren können dazu Azoverbindungen, wie Azodiisobutyronitril, oder Peroxide, wie Dibenzoylperoxid, Dilauroylperoxid, oder Redoxsysteme dienen, oder die Startradikale können strahlenchemisch erzeugt werden. (Vgl. H. Rauch-Puntigam, Th. Volker "Acryl- und Methacrylverbindungen, Springer Verlag 1967).

Es ist bekannt, daß die Verträglichkeit von Polymeren in Mischungen von ihren Polymerisationsgraden abhängt, und zwar nimmt in der Regel die Verträglichkeit mit steigendem Molekulargewicht der Polymeren ab, wobei die Mischung dann zwei- bzw. mehrphasig wird. Für die Herstellung von erfindungsgemäßen Polycarbonat-Polymethacrylat-Legierungen werden Methacrylat-Copolymere eingesetzt, die Molekulargewichte, Mw, in g pro Mol, wie sie beispielsweise mit Hilfe der Gelpermeations-Chromatographie oder mit der Streulichtmethode bestimmbar sind, über 30 000, von 30 000 bis 250 000, vorzugsweise etwa 50 000 bis

150 000 haben und deren reduzierten Viskositäten $\eta$ spec/c, gemessen gemäß DIN 51 562, in Chloroform als Lösungsmittel, im Bereich von 18 bis 65 ml/g, bevorzugt im Bereich von 30 bis 50 ml/g, liegen. Die Herstellung der so molekulargewichtsgeregelten Copolymerisate wird insbesondere durch Polymerisation in Gegenwart von Übertragungsreglern, wie insbesondere den dazu bekannten Mercaptanen, durchgeführt (s. dazu Houben-Weyl, Methoden der organischen Chemie, Band XIV/1, 1961, Seite 66). So sind beispielsweise Methylmethacrylat-Copolymerisate mit 5 bis 50 Gew.-% Cyclohexylmethacrylat und einem $\eta$spec/c von 40 bis 45 ml/g über den gesamten Legierungsbereich mit Bisphenol A-Polycarbonat, z.B. Makrolon® 1189, das ein $\eta$spec/c von 43 ml/g (gemessen in Chloroform) hat, verträglich.

Die erfindungsgemäßen Polycarbonat-verträglichen Methacrylat-Copolymeren lassen sich zu glasklaren farblosen Formkörpern thermoplastisch verarbeiten, welche Vicat-Erweichungstemperaturen, VET, gemessen nach DIN 53 460, von etwa 100 bis 130 Grad C aufweisen.

Als mit den erfindungsgemäßen Methacrylatcopolymerisaten verträgliche Polycarbonate, werden insbesondere aromatische Polycarbonate, vor allem Polycarbonate des Bisphenol A, eingesetzt.
Polycarbonate des Bisphenol A sind glasklare, zähe Kunststoffe und z.B. unter der Bezeichnung Makrolon® im Handel. Die Molekulargewichte, Mw (s. dazu oben), der diesen Kunststoffen zugrundeliegenden Carbonatpolymeren liegen im Bereich von etwa 20 000 bis 60 000, insbesondere 20 000 bis 40 000 und die Vicat-Erweichungstemperaturen, VET, dieser Kunststoffe, gemessen nach DIN 53 460, liegen bei 140 Grad C.

Durch Legieren der beiden Kunststoffarten wird ein transparentes Kunststoffsystem mit anderen, insbesondere mit günstigeren Eigenschaften erhalten, als sie die Einzelkunststoffe vor dem Legieren zeigen. Beispielsweise kann die thermoplastische Verarbeitung des Poly-Bisphenol A-Carbonats, das als Materialeigenschaft eine hohe Schmelzviskosität hat, durch Zulegieren von thermoplastischem Polymethacrylat-Kunststoff erleichtert werden, ohne daß andere Eigenschaften des Polycarbonates, wie dies bekanntermaßen durch Zulegieren niedermolekularer Acrylpolymerer geschieht, wesentlich verändert werden.

Die Wärmeformbeständigkeit nach Vicat (VET nach DIN 53 460) bzw. die mit diesen korrelierenden Glasübergangstemperaturen $T_g$ (gemessen nach der DSC-Methode, s. dazu Polymer Handbook, 2. Auflage, III, S. 139 - 141) der erfindungsgemäß einzusetzenden Polymethacrylatharze, mit Werten von etwa 100 bis 130 Grad C, liegen meist gegenüber denen von gebräuchlichen, handelsüblichen Polymethacrylatformmassen, deren Werte etwa 100 Grad C betragen, deutlich höher.

Die erfindungsgemäßen Legierungen zeigen überraschenderweise über dem gesamten bzw. einem weiten Mischungsbereich, Wärmeformbeständigkeiten, die gegenüber denjenigen der Einzelkunststoffe, wie insbesondere dem gegenüber Polymethylmethacrylat deutlich höher wärmeformbeständigen Polycarbonat des Bisphenol A, meist nur um wenige Temperaturgrade niedriger liegen.

Mischungen der Polymer-Komponenten (A) und (B) lassen sich beispielsweise als Granulat durch Extrusion oder Spritzguß zu den verschiedensten Formkörpern, bestehend aus den erfindungsgemäßen Polymermischungen verarbeiten. Als Beispiele seien Platten, Hohlkammerplatten, Formkörper für optische Zwecke, wie Linsen oder Prismen oder Lichtleiter oder Reflektoren, und optisch lesbare Informationsträger genannt. Die heute zu deren Herstellung u.a. verwendeten Polymer-Materialien, wie Bisphenol A-Polycarbonat oder Polymethylmethacrylat, verursachen Probleme bezüglich optischer Doppelbrechung bzw. Wasseraufnahme. Hier zeigen die erfindungsgemäßen Materialien deutliche Vorteile, auch gegenüber den Legierungen, die mit Methacrylatcopolymerisaten, aufgebaut mit Stickstoff-haltigen Comonomeren, hergestellt werden können.

Durch Gießen von die Polymerkomponenten (A) und (B) enthaltenden Lösungen, lassen sich Folien oder Formkörper der erfindungsgemäßen Polymermischungen herstellen.

A. Beispiele 1 - 15:

Herstellung von Methacrylat-(Co)-Polymerisaten

Beispiel 1

Einem Gemisch aus 80 Gew.-Teilen Methylmethacrylat (MMA) und 20 Gew.-Teilen Cyclohexylmethacrylat (CHMA) werden 0,2 Gew.-Teile Dilauroylperoxid (als Initiator) und 0,7 Gew.-Teile Dodecylmercaptan als Molekulargewichtsregler unter Rühren hinzugefügt. Diese Lösung wird in einem Folienschlauch im Wasserbad 3 h bei 55 Grad C und 16 h bei 50 Grad C polymerisiert und zur Endpolymerisation 3 h bei 110 Grad C im Trockenschrank getempert. Das so gewonnene und zur Herstellung von Polymermischungen gemäß den Beispielen 16 - 20 eingesetzte Polymerisat ist farblos und vollig transparent. Das mittlere Molekulargewicht wurde zu Mw = 75 000 und die Glasübergangstemperatur Tg zu 108 Grad C bestimmt.

Beispiel 2

Ein Gemisch aus 78 Gew.-Teilen MMA, 20 Gew.-Teilen CHMA und 2 Gew.-Teilen Cyclohexylacrylat (CHA) wurde mit 0,2 Gew.-Teilen Dilauroylperoxid sowie 0,7 Gew.-Teilen Dodecylmercaptan gemäß Beispiel 1 polymerisiert. Das daraus resultierende und zur Herstellung von Polymermischungen gemäß den Beispielen 21 - 25 eingesetzte Polymerisat ist farblos und völlig transparent. Es wurde das mittlere Molekulargewicht zu Mw = 78 000 und die Glasübergangstemperatur zu Tg = 105 Grad C bestimmt.

Beispiel 3

Einem Gemisch aus 80 Gew.-Teilen MMA; 10 Gew.-Teilen CHMA und 10 Gew.-Teilen $\alpha$-Methylstyrol ($\alpha$-MS) werden als Initiatoren 0,1 Gew.-Teile 2,2'-Bis-(tert-butylperoxy)butan sowie 0,4 Gew.-Teile tert-Butylperoctoat und 0,8 Gew.-Teile Dodecylmercaptan als Molekulargewichtsregler hinzugefügt. Diese Lösung wird im Wasserbad in einem Folienschlauch 65 h bei 60 Grad C und 24 h bei 62 Grad C polymerisiert und zur Endpolymerisation 10 h bei 125 Grad C getempert. Das so gewonnene und zur Herstellung von Polymermischungen gemäß den Beispielen 26 - 30 eingesetzte Polymerisat ist farblos und völlig transparent. Das mittlere Molekulargewicht beträgt Mw = 80 000, die Glasübergangstemperatur Tg = 121 Grad C.

Beispiel 4

In einem Gemisch aus 75 Gew.-Teilen MMA, 10 Gew.-Teilen CHMA, 10 Gew.-Teilen $\alpha$-MS und 5 Gew.-Teilen CHA werden als Initiatoren 0,4 Gew.-Teile tert-Butylperpivalat, 0,15 Gew.-Teile 2,2'-Azobis-(isobutyronitril) und 0,4 Gew.-Teile Dilauroylperoxid sowie 2,2'-Bis-(tert-butylperoxy)butan und 0,44 Gew.-Teile Dodecylmercaptan als Molekulargewichtsregler gelöst. Diese Lösung wird gemäß den vorausgehenden Beispielen 70 h bei 65 Grad C im Wasserbad polymerisiert und zur Endpolymerisation 7 h bei 100 Grad C und 10 h bei 125 Grad C im Trockenschrank getempert. Das resultierende farblose und völlig klare Polymerisat weist ein mittleres Molekulargewicht Mw = 125 000 auf und wird zur Herstellung von Polymermischungen gemäß den Beispielen 31 - 35 eingesetzt.

Beispiel 5

In 90 Gew.-Teilen MMA und 10 Gew.-Teilen 4-tert-Butylcyclohexylmethacrylat werden 0,2 Gew.-Teile Dilauroylperoxid sowie 0,55 Gew.-Teile Dodecylmercaptan gelöst. Diese Lösung wird im Folienschlauch im Wasserbad 8 h bei 50 Grad C polymerisiert und zur Endpolymerisation 3 h bei 110 Grad C getempert. Das mittlere Molekulargewicht des farblosen und völlig transparenten Polymerisats, das zur Herstellung der Polymermischungen gemäß den Beispielen 36 - 40 eingesetzt wird, beträgt Mw = 95 000.

Beispiel 6

Einem Gemisch von 90 Gew.-Teilen MMA und 10 Gew.-Teilen 3-Cyclohexylpropylmethacyrlat werden 0,2 Gew.-Teile Dilauroylperoxid und 0,62 Gew.-Teile Dodecylmercaptan hinzugefügt. Diese Lösung wird, gemäß Beispiel 5, 19 h bei 50 Grad C im Wasserbad polymerisiert und zur Endpolymerisation 3 h bei 110 Grad C getempert. Das zur Herstellung von Polymermischungen gemäß den Beispielen 41 - 45 eingesetzte Polymerisat ist farblos, völlig klar und besitzt ein mittleres Molekulargewicht Mw = 89 000.

Beispiel 7

In einem Gemisch von 75 Gew.-Teilen MMA und 25 Gew.-Teilen Phenylmethacrylat (PhMA) werden 0,2 Gew.-Teile Dilauroylperoxid und 0,55 Gew.-Teile Dodecylmercaptan gelöst. Die Lösung wird gemäß den vorangehenden Beispielen im Wasserbad 18 h bei 50 Grad C und 22 h bei 60 Grad C polymerisiert und zur Endpolymerisation 3 h bei 110 Grad C getempert. Das Polymerisat ist farblos, transparent, weist ein mittleres Molekulargewicht von Mw = 84 000 auf, besitzt eine Glasübergangstemperatur Tg = 110 Grad C sowie eine Vicat-Erweichungstemperatur VET = 107 Grad C und wird zur Herstellung von Polymermischungen gemäß den Beispielen 46-50 eingesetzt.

Beispiel 8

Eine sonst zu Beispiel 7 analoge Lösung mit 0,3 Gew.-Teilen Dodecylmercaptan als Molekulargewichtsregler wird im Folienschlauch im Wasserbad 17 h bei 60 Grad C polymerisiert und zur Endpolymerisation 12 h bei 110 Grad C getempert. Das zur Herstellung von Polymermischungen gemäß den Beispielen 51 - 55 eingesetzte Polymermisat ist farblos, völlig klar und besitzt ein mittleres Molekulargewicht Mw = 149 000.

Beispiel 10

In einem Gemisch aus 60 Gew.-Teilen MMA, 20 Gew.-Teilen α-MS sowie 20 Gew.-Teilen PhMA werden als Initiatoren 0,4 Gew.-Teile tert-Butylperpivalat 0,1 Gew.-Teile 2,2′-Azobis-(isobutyronitril), 0,37 Gew.-Teile Dilauroylperoxid 0,3 Gew.-Teile tert-Butylperoctoat sowie 0,05 Gew.-Teile 2,2′-Bis-(tert-butylperoxy)butan und als Molekulargewichtsregler 0,55 Gew.-Teile Dodecylmercaptan gelöst. Diese Lösung wird im Wasserbad im Folienschlauch 65 h bei 60 Grad C sowie 90 h bei 65 Grad C polymerisiert und zur Endpolymerisation 12 h bei 110 Grad C getempert. Das zur Herstellung von Polymermischungen gemäß den Beispielen 61 - 65 verwendete Polymerisat ist farblos, völlig klar, besitzt ein mittleres Molekulargewicht Mw = 89 000 und weist eine Glasübergangstemperatur Tg = 117 Grad C sowie eine Vicat-Erweichungstemperatur VET = 112 Grad C auf.

Beispiel 11

In einem Gemisch aus 55 Gew.-Teilen MMA, 20 Gew.-Teilen α-MS, 20 Gew.-Teilen PhMA und 5 Gew.-Teilen CHA werden 0,4 Gew.-Teile tert-Butylperpivalat, 0,2 Gew.-Teile 2,2′-Azobis-(isobutyronitril), 0,8 Gew.-Teile Dilauroylperoxid und 0,05 Gew.-Teile 2,2′Bis(tertbutylperoxy)butan als Initiatoren sowie 0,45 Gew.-Teile Dodecylmercaptan als Molekulargewichtsregler gelöst. Diese Lösung wird gemäß den vorhergehenden Beispielen 96 h bei 65 Grad C polymerisiert und zur Endpolymerisation 7 h bei 100 Grad C sowie 10 h bei 125 Grad C getempert. Das Polymerisat ist farblos, transparent, besitzt ein mittleres Molekulargewicht Mw = 130 000 und wird zur Herstellung von Polymermischungen gemäß den Beispielen 66 - 70 verwendet.

Beispiel 12

Einem Gemisch von 45 Gew.-Teilen MMA, 45 Gew.-Teilen PhMA und 10 Gew.-Teilen Styrol werden als Initiatoren 0,2 Gew.-Teile 2,2′-Azobis(-isobutyronitril) und 0,05 Gew.-Teile 2,2′-Bis-(tert-butylperoxy)butan sowie 0,8 Gew.-Teile tert-Dodecylmercaptan als Molekulargewichtsregler zugegeben. Diese Lösung wird im Folienschlauch im Wasserbad 20 h bei 55 Grad C polymerisiert und zur Endpolymerisation 12 h bei 110 Grad C getempert. Das zur Herstellung von Polymermischungen gemäß den Beispielen 71 - 75 verwendete Polymerisat ist farblos, völlig klar und weist ein mittleres Molekulargewicht Mw = 102 000 auf.

Beispiel 13

In einem Gemisch aus 90 Gew.-Teilen MMA und 10 Gew.-Teilen 2-Phenylethylmethacrylat werden 0,2 Gew.-Teile Dilauroylperoxid (Initiator) und 0,7 Gew-Teile Dodecylmercaptan gelost. Die Polymerisation dieser Lösung erfolgt gemäß den vorangegangenen Beispielen 3 h bei 55 Grad C und 16 h bei 50 Grad C im Wasserbad sowie 3 h bei 110 Grad C im Trockenschrank zur Endpolymerisation. Das so erhaltene Polymerisat ist farblos, transparent, besitzt ein mittleres Molekulargewicht von Mw = 78 000, weist eine Glasübergangstemperatur von Tg = 104 Grad C auf und wird zur Herstellung von Polymergemischen gemäß den Beispielen 76 - 80 verwendet.

Beispiel 14

Einem Gemisch von 90 Gew.-Teilen MMA und 10 Gew.-Teilen 3-Phenylpropylmethacrylat (3-PPMA) werden 0,2 Gew.-Teile Dilauroylperoxid sowie 0,51 Gew.-Teile Dodecylmercaptan hinzugefügt. Diese Lösung wird im Folienschlauch im Wasserbad 3 h bei 55 Grad C sowie 60 h bei 50 Grad C polymerisiert und zur Endpolymerisation 3 h bei 110 Grad C getempert. Das zur Herstellung von Polymermischungen gemäß den Beispielen 81 - 85 verwendete Polymerisat ist farblos, transparent, weist eine Glasübergangstemperatur von Tg = 103 Grad C auf und besitzt ein mittleres Molekulargewicht Mw = 100 000.

Beispiel 15

Ein Gemisch aus 88 Gew.-Teilen MMA, 10 Gew.-Teilen 3-PPMA und 2 Gew.-Teilen 3-Phenylpropylacrylat wird wie in Beispiel 14 polymerisiert (gleicher Initiator und Regler und die gleichen Mengen derselben, sowie dieselben Polymerisationsbedingungen). Das resultierende Polymerisat ist farblos, transparent und besitzt ein mittleres Molekulargewicht von Mw = 100 000.

B. Beispiele 16 - 90

Erfindungsgemäße Mischungen

Beispiele 16 - 20

Das gemäß Beispiel 1 hergestellte Copolymerisat wird mit Makrolon® 1189 (beide in Granulatform) in den angegebenen Mengenverhältnissen gemischt und auf einem Einschnecken-Mischextruder als Band extrudiert. An Bandproben werden visuelle Prüfungen, Messungen der Glasübergangstemperatur Tg per DSC (s. dazu Polymer-Handbook, 2. Aufl. III, S. 139 - 141), Messungen der Vicat-Erweichungstemperatur VET nach DIN 53 460 an 3 mm dicken Prüfplättchen (aus den extrudierten Bändchen auf einer Anker-Spritzgußmaschine hergestellt) durchgeführt, sowie auf einer Kofler-Heizbank (Chem.-Ing-Techn. 1950, S. 289) der Trübungspunkt (Trübungstemperatur) $T_{Tr}$ bestimmt, der den von der Mischungszusammensetzung abhängigen Phasenübergang, homogen nach heterogen, des Gemischs charakterisiert: LCST-Verhalten. (D.R. Paul, Polymer Blends and Mixtures, 1985, S. 1 - 3, Martinus Nijhoff Publishers, Dordrecht, Boston, Lancaster).

| Beisp. Nr. | Makrolon/ Copolymerisat (Gew.-Teile) | Aussehen des Extrudats | Tg (Grad C) | VET (Grad C) | $T_{Tr}$ ± 15 (Grad C) |
|---|---|---|---|---|---|
| 16 | 90 / 10 | klar, farblos | – | – | 224 |
| 17 | 70 / 30 | " " | – | – | 219 |
| 18 | 50 / 50 | " " | 117 | 119 | 226 |
| 19 | 30 / 70 | " " | – | – | 246 |
| 20 | 10 / 90 | " " | – | – | > 260 |
| Vergl. | Makrolon 1198 | " " | 138 | 138 | |
| | Copolymerisat 1 | " " | 108 | 110 | |

Striche bei Meßdaten in dieser und den nachfolgenden Tabellen bedeuten, däß keine Messungen durchgeführt wurden

Beispiele 21 - 25

Makrolon® 1189 und das gemäß Beispiel 2 hergestellte Copolymerisat werden in den angegebenen Mengenverhältnissen gemischt, extrudiert und gemäß den Beispielen 16 - 20 auf $T_{Tr}$ untersucht.

| Beisp. Nr. | Makrolon/ Copolymerisat (Gew.-Teile) | Aussehen des Extrudats | $T_{Tr}$ ± 15 (Grad C) |
|---|---|---|---|
| 21 | 90 / 10 | klar, farblos | 216 |
| 22 | 70 / 30 | " " | 212 |
| 23 | 50 / 50 | " " | 218 |
| 24 | 30 / 70 | " " | 238 |
| 25 | 10 / 90 | " " | > 260 |
| Vergl. | Copolymerisat 2 (Tg 105 Grad C) | " " | |

Beispiele 26 - 30

Makrolon® 1189 und das gemäß Beispiel 3 hergestellte Copolymerisat werden gemischt, extrudiert und gemäß den Beispielen 16 - 20 auf Tg und $T_{Tr}$ untersucht.

| Beisp. Nr. | Makrolon / Copolymerisat | Aussehen des Extrudats | Tg (Grad C) | $T_{Tr}$ ± 15 (Grad C) |
|---|---|---|---|---|
| 26 | 90 / 10 | klar, farblos | — | 232 |
| 27 | 70 / 30 | " " | — | 214 |
| 28 | 50 / 50 | " " | 125 | 235 |
| 29 | 30 / 70 | " " | — | 255 |
| 30 | 10 / 90 | " " | — | > 260 |
| Vergl. | Copolymerisat 3 | " " | 121 | |

Beispiele 31 - 35

Makrolon® 1189 und das gemäß Beispiel 4 hergestellte Copolymerisat werden gemischt, extrudiert und gemäß den Beispielen 21 - 25 auf $T_{Tr}$ untersucht.

| Beisp. Nr. | Makrolon/ Copolymerisat (Gew.-Teile) | Aussehen des Extrudats | $T_{Tr}$ ± 15 (Grad C) |
|---|---|---|---|
| 31 | 90 / 10 | klar, farblos | 186 |
| 32 | 70 / 30 | " " | 178 |
| 33 | 50 / 50 | " " | 175 |
| 34 | 30 / 70 | " " | 188 |
| 35 | 10 / 90 | " " | 245 |
| Vergl. | Copolymerisat 4 | " " | |

Beispiele 36 - 45

Makrolon® 1189 und das gemäß den Beispielen 5 und 6 hergestellte Copolymerisat werden in den angegebenen Mengenverhältnissen gemischt, extrudiert und gemäß den Beispielen 21 - 25 auf $T_{Tr}$ untersucht.

| Beisp. Nr. | Makrolon/ Copolymerisat nach Beisp. 5 (Gew.-Teile) | Aussehen des Extrudats | $T_{Tr}$ ± 15 (Grad C) |
|---|---|---|---|
| 36 | 90 / 10 | klar, farblos | 196 |
| 37 | 70 / 30 | " " | 190 |
| 38 | 50 / 50 | " " | 186 |
| 39 | 30 / 70 | " " | 192 |
| 40 | 10 / 90 | " " | > 260 |
| Vergl. | Copolymerisat 5 | | |

| Beisp. Nr. | Makrolon/ Copolymerisat nach Beisp. 6 (Gew.-Teile) | Aussehen des Extrudats | $T_{Tr}$ ± 15 (Grad C) |
|---|---|---|---|
| 41 | 90 / 10 | klar, farblos | 215 |
| 42 | 70 / 30 | " " | 182 |
| 43 | 50 / 50 | " " | 181 |
| 44 | 30 / 70 | " " | 190 |
| 45 | 10 / 90 | " " | > 260 |
| Vergl. | Copolymerisat 6 | " " | |

Beispiele 46 - 50

Makrolon® 1189 und das gemäß Beispiel 7 hergestellte Copolymerisat werden in den angegebenen Mengenverhältnissen gemischt, extrudiert und gemäß den Beispielen 16 - 20 auf Tg, VET und $T_{Tr}$ untersucht.

| Beisp. Nr. | Makrolon/ Copolymeres (Gew.-Teile) | Aussehen des Extrudats | Tg (Grad C) | VET (Grad C) | $T_{Tr} \pm 15$ (Grad C) |
|---|---|---|---|---|---|
| 46 | 90 / 10 | klar, farblos | — | — | 260 |
| 47 | 70 / 30 | " " | — | — | 250 |
| 48 | 50 / 50 | " " | 119 | 114 | > 260 |
| 49 | 30 / 70 | " " | — | — | > 260 |
| 50 | 10 / 90 | " " | — | — | > 260 |
| Vergl. | Copolymerisat 7 | " " | 110 | 107 | |

Beispiele 51 - 55

Makrolon® 3100 und das gemäß Beispiel 8 hergestellte Copolymerisat werden in den angegebenen Mengenverhältnissen gemischt, extrudiert und gemäß den Beispielen 21 - 25 auf $T_{Tr}$ untersucht.

| Beisp. Nr. | Makrolon/ Copolymerisat (Gew.-Teile) | Aussehen des Extrudats | $T_{Tr} \pm 15$ (Grad C) |
|---|---|---|---|
| 51 | 90 / 10 | klar, farblos | 224 |
| 52 | 70 / 30 | " " | 229 |

| Beisp. Nr. | Makrolon/ Copolymerisat (Gew.-Teile) | Aussehen des Extrudats | $T_{Tr} \pm 15$ (Grad C) |
|---|---|---|---|
| 53 | 50 / 50 | " " | 240 |
| 54 | 30 / 70 | " " | > 260 |
| 55 | 10 / 90 | " " | > 260 |
| Vergl. | Copolymeres 8 | " " | |
| Vergl. | Makrolon ® 3100 (Tg 148 Grad C) | " " | |

Beispiele 61 - 65

Makrolon® 1189 und das gemäß Beispiel 10 hergestellte Copolymerisat werden in den angegebenen Mengenverhältnissen gemischt, extrudiert und gemäß den Beispielen 16 - 20 auf Tg, VET und $T_{Tr}$

untersucht.

| Beisp. Nr. | Makrolon/ Copolymerisat (Gew.-Teile) | Aussehen des Extrudats | Tg (Grad C) | VET (Grad C) | $T_{Tr}$ ± 15 (Grad C) |
|---|---|---|---|---|---|
| 61 | 90 / 10 | klar, farblos | — | — | 235 |
| 62 | 70 / 30 | " " | — | — | 232 |
| 63 | 50 / 50 | " " | 125 | 118 | 250 |
| 64 | 30 / 70 | " " | — | — | > 260 |
| 65 | 10 / 90 | " " | — | — | > 260 |
| Vergl. | Copolymerisat 10 | " " | 117 | 112 | |

Beispiele 66 - 75

Makrolon® 1189 und die gemäß den Beispielen 11 und 12 hergestellten Copolymerisate werden in den angegebenen Mengenverhältnissen gemischt, extrudiert und gemäß den Beispielen 21 - 25 auf $T_{Tr}$ untersucht.

| Beisp. Nr. | Makrolon/ Copolymerisat nach Beisp. 11 (Gew.-Teile) | Aussehen des Extrudats | $T_{Tr}$ ± 15 (Grad C) |
|---|---|---|---|
| 66 | 90 / 10 | klar, farblos | 197 |
| 67 | 70 / 30 | " " | 186 |

| Beisp. Nr. | Makrolon/ Copolymerisat nach Beisp. 11 (Gew.-Teile) | Aussehen des Extrudats | $T_{Tr}$ ± 15 (Grad C) |
|---|---|---|---|
| 68 | 50 / 50 | " " | 217 |
| 69 | 30 / 70 | " " | 240 |
| 70 | 10 / 90 | " " | > 260 |
| Vergl. | Copolymerisat 11 | " " | |

| Beisp. Nr. | Makrolon/ Copolymerisat nach Beisp. 12 (Gew.-Teile) | Aussehen des Extrudats | $T_{Tr}$ ± 15 (Grad C) |
|---|---|---|---|
| 71 | 90 / 10 | klar, farblos | 208 |
| 72 | 70 / 30 | " " | 196 |
| 73 | 50 / 50 | " " | 207 |
| 74 | 30 / 70 | " " | 236 |
| 75 | 10 / 90 | " " | > 260 |
| Vergl. | Copolymerisat 12 | " " | |

Beispiele 76 - 85

Makrolon® 1189 und die gemäß den Beispielen 13 und 14 hergestellten Copolymerisate werden in den angegebenen Mengenverhältnissen gemischt, extrudiert und gemäß den Beispielen 16 - 20 auf Tg und $T_{Tr}$ untersucht.

| Beisp. Nr. | Makrolon/ Copolymerisat nach Beisp. 13 (Gew.-Teile) | Aussehen des Extrudats | Tg (Grad C) | $T_{Tr}$ ± 15 (Grad C) |
|---|---|---|---|---|
| 76 | 90 / 10 | klar, farblos | — | 223 |
| 77 | 70 / 30 | " " | — | 212 |
| 78 | 50 / 50 | " " | 115 | 219 |
| 79 | 30 / 70 | " " | — | 243 |
| 80 | 10 / 90 | " " | — | >260 |
| Vergl. | Copolymerisat 13 | " " | 104 | |

| Beisp. Nr. | Makrolon/ Copolymerisat nach Beisp. 13 (Gew.-Teile) | Aussehen des Extrudats | Tg (Grad C) | $T_{Tr}$ ± 15 (Grad C) |
|---|---|---|---|---|
| 81 | 90 / 10 | klar, farblos | — | 207 |
| 82 | 70 / 30 | " " | — | 194 |
| 83 | 50 / 50 | " " | 112 | 206 |
| 84 | 30 / 70 | " " | — | 228 |
| 85 | 10 / 90 | " " | — | >260 |
| Vergl. | Copolymerisat 14 | " " | 103 | |

Beispiele 86 - 90

Makrolon® 1189 und das gemäß Beispiel 15 hergestellte Copolymerisat werden in den angegebenen Mengenverhältnissen gemischt, extrudiert und gemäß den Beispielen 21 - 25 auf $T_{Tr}$ untersucht.

| Beisp. Nr. | Makrolon/ Copolymerisat (Gew.-Teile) | Aussehen des Extrudats | $T_{Tr}$ + 15 (Grad C) |
|---|---|---|---|
| 86 | 90 / 10 | klar, farblos | 192 |
| 87 | 70 / 30 | " " | 186 |
| 88 | 50 / 50 | " " | 192 |
| 89 | 30 / 70 | " " | 218 |
| 90 | 10 / 90 | " " | >260 |
| Vergl. | Copolymerisat 15 | " " | |

## Patentansprüche

1. Transparente, thermoplastisch verarbeitbare Polymermischung bestehend aus (A) einem aromatischen Polycarbonat und (B) einem Methacrylat-Copolymerisat,
   dadurch, gekennzeichnet,
   daß das Copolymerisat (B)
   1. aus 95 bis 5 Gew.-%, insbesondere 95 bis 20 Gew.-%, Methylmethacrylateinheiten und weiteren $\alpha,\beta$-ungesättigten Monomereinheiten in Mengen von 0 bis 40 Gew.-% und
   2. aus 5 bis 95 Gew.-%, insbesondere 5 bis 80 Gew.-%, Methacrylestereinheiten und 0, insbesondere 1, bis 5 Gew.-% Acrylestereinheiten jeweils mit carbocyclischen Gruppen im Esterrest der Formel I

$$H_2C = \overset{\overset{\displaystyle R_1}{|}}{C} - \overset{\overset{\displaystyle O}{\|}}{C} - O - X \qquad I,$$

   worin
   $R_1$: H oder $CH_3$ und
   X: Y oder A-Y sind, wobei
   Y ein Cycloalkyl- oder ein einfach oder mehrfach alkylsubstituierter Cycloalkylrest mit 5 -12 C-Atomen, oder ein gegebenenfalls alkyl-bzw. oxyalkylsubstituierter Arylrest mit 6 bis 12 C-Atomen, und A eine Alkylenguppe, die auch verzweigt sein kann, mit 1 bis 6 C-Atomen oder eine Oxialkylengruppe mit 2 bis 4 C-Atomen sind
   besteht, und
   3. ein Molekulargewicht über 30 000 hat.

2. Transparente, thermoplastisch verarbeitbare Polymermischung gemäß Anspruch 1, dadurch gekennzeichnet, däß das Copolymerisat (B) aus bis zu 40 Gew.-% Styrol- und/oder $\alpha$-Methylstyrol-Einheiten besteht.

3. Transparente, thermoplastisch verarbeitbare Polymermischung gemäß den Ansprüchen 1 und 2, dadurch gekennzeichnet, däß das Copolymerisat (B) aus bis zu 40 Gew.-% weiterer Acryl- und/oder Methacrylestereinheiten besteht.

4. Transparente, thermoplastisch verarbeitbare Polymermischung gemäß den Ansprüchen 1 bis 3, dadurch gekennzeichnet, däß das Polycarbonat (A) das Polycarbonat von 2,2-Bis-(4-hydroxyphenyl)-propan ist.

5. Verwendung von Polymermischungen gemäß den Ansprüchen 1 bis 4 für die Herstellung von Formkörpern.

6. Verwendung von Polymermischungen gemäß den Ansprüchen 1 bis 4 für die Herstellung von für optische Zwecke zu verwendenden Formkörpern.

7. Verwendung von Polymermischungen gemäß den Ansprüchen 1 bis 4 für die Herstellung optisch lesbarer Informationsträger.

## Claims

1. Transparent, thermoplastically workable polymer mixture consisting of (A) an aromatic polycarbonate and (B) a methacrylate copolymer, characterised in that the copolymer (B) consists of
   1) 95 to 5 wt.%, more particularly 95 to 20 wt.%, of methyl methacrylate units and other $\alpha,\beta$-unsaturated monomer units in amounts of from 0 to 40 wt.% and
   2) 5 to 95 wt.%, more particularly 5 to 80 wt.%, of methacrylic ester units and 0, particularly 1 to 5 wt.% of acrylic ester units each having carbocyclic groups in the ester group of formula I

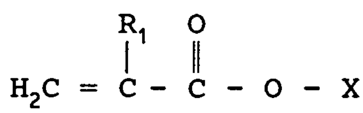

(I)

   wherein
   $R_1$ represents H or $CH_3$ and
   X represents Y or A-Y, whilst
   Y is a cycloalkyl or a mono- or polyalkyl-substituted cycloalkyl group having 5 to 12 carbon atoms, or an optionally alkyl- or oxyalkyl-substituted $C_{6-12}$ aryl group, and A is a $C_{1-6}$ alkylene group, which may also be branched, or a $C_{2-4}$ oxyalkylene group, and
   3) has a molecular weight of more than 30,000.

2. Transparent, thermoplastically workable polymer mixture according to claim 1, characterized in that the copolymer (B) consists of up to 40 wt.% of styrene and/or $\alpha$-methyl-styrene units.

3. Transparent, thermoplastically workable polymer mixture according to claims 1 and 2, characterized in that the copolymer (B) consists of up to 40 wt.% of other acrylic and/or methacrylic ester units.

4. Transparent, thermoplastically workable polymer mixture according to claims 1 to 3, characterised in that the polycarbonate (A) is the polycarbonate of 2,2-bis-(4-hydroxyphenyl)-propane.

5. Use of polymer mixtures according to claims 1 to 4 for the production of mouldings.

6. Use of polymer mixtures according to claims 1 to 4 for the production of mouldings to be used for optical purposes.

7. Use of polymer mixtures according to claims 1 to 4 for the production of optically readable information carriers.

## Revendications

1. Mélange de polymères transparent transformable thermoplastiquement, se composant de (A) un polycarbonate aromatique et (B) un copolymère de méthacrylate, caractérisé en ce que le copolymère (B) est constitué
   1. par 95 à 5% en poids, en particulier 95 à 20% en poids, de motifs méthacrylate de méthyle et d'autres motifs monomères $\alpha,\beta$-insaturés dans des proportions de 0 à 40% en poids, et
   2. par 5 à 95% en poids, en particulier 5 à 80% en poids de motifs ester méthacrylique et 0 à 5%, en particulier 1 à 5% en poids de motifs ester acrylique, contenant les uns et les autres des

groupements carbocycliques dans le reste ester de formule I

$$H_2C = \overset{\overset{R_1}{|}}{C} - \overset{\overset{O}{\|}}{C} - O - X \qquad\qquad I$$

dans laquelle

$R_1$ = H ou $CH_3$ et

X = Y ou A-Y;

Y étant un reste cycloalkyle ou cycloalkyle alkylsubstitué une fois ou plusieurs fois à 5-12 atomes de carbone, ou un reste aryle à 6-12 atomes de carbone éventuellement alkyl- ou oxyalkylsubstitué, et A étant un groupement alkylène à 1-6 atomes de carbone qui peut être ramifié ou un groupement oxyalkylène à 2-4 atomes de carbone, et

3. en ce qu'il a un poids moléculaire de plus de 30 000.

**2.** Mélange de polymères transparent transformable thermoplastiquement selon la revendication 1, caractérisé en ce que le copolymère (B) se compose, pour une part pouvant aller jusqu'à 40% en poids, de motifs styrène et/ou $\alpha$-méthylstyrène.

**3.** Mélange de polymères transparent transformable thermoplastiquement selon la revendication 1 ou 2, caractérisé en ce que le copolymère (B) se compose, pour une part pouvant aller jusqu'à 40% en poids, d'autres motifs ester acrylique et/ou méthacrylique.

**4.** Mélange de polymères transparent transformable thermoplastiquement selon l'une quelconque des revendications 1 à 3, caractérisé en ce que le polycarbonate (A) est le polycarbonate de 2,2-bis(4-hydroxyphényl)propane.

**5.** Utilisation de mélanges de polymères selon l'une quelconque des revendications 1 à 4 pour la fabrication de corps moulés.

**6.** Utilisation de mélanges de polymères selon l'une quelconque des revendications 1 à 4 pour la fabrication de corps moulés destinés à être utilisés dans des applications optiques.

**7.** Utilisation de mélanges de polymères selon l'une quelconque des revendications 1 à 4 pour la fabrication de supports d'informations à lecture optique.